## Europäisches Patentamt
## European Patent Office
## Office européen des brevets

(19)

(11) Numéro de publication: **0 000 415 B1**

## (12) FASCICULE DE BREVET EUROPEEN

(45) Date de publication du fascicule de brevet:
29.04.81

(21) Numéro de dépôt: **78200085.5**

(22) Date de dépôt: **07.07.78**

(51) Int. Cl.³: **C 01 F 11/18, C 09 C 1/02 //**
**C09D17/00, D21H1/22**

(54) Procédé pour la préparation de suspensions aqueuses contenant au moins 65% en poids de carbonate de calcium.

(30) Priorité: **11.07.77 LU 77723**

(43) Date de publication de la demande:
**24.01.79 Bulletin 79/2**

(45) Mention de la délivrance du brevet:
**29.04.81 Bulletin 81/17**

(84) Etats contractants désignés:
**BE CH DE FR GB LU NL SE**

(56) Documents cités:
**FR-A-2 261 227**
**FR-A-2 292 747**
**FR-A-2 300 611**
**CHEMICAL ABSTRACTS,**
**vol. 81, n° 16,**
**21 octobre 1974, page 41,**
**résumé 92495p, Suzukawa**

(73) Titulaire: **SOLVAY & Cie (Société Anonyme), Rue du Prince Albert, 33, B-1050 Bruxelles (BE)**

(72) Inventeur: **Brahm, Jacques, Snoekgracht 10, B-1850 Grimbergen (BE)**
Inventeur: **De Rath, Jean-Pierre, Avenue de Roodebeek 241, B-1040 Bruxelles (BE)**

(74) Mandataire: **Eischen, Roland, Solvay & Cie Département de la Propriété Industrielle Rue de Ransbeek 310, B-1120 Bruxelles (BE)**

## Procédé pour la préparation de suspensions aqueuses contenant au moins 65% en poids de carbonate de calcium

La présente invention a pour objet la préparation de suspensions aqueuses concentrées de carbonate de calcium, par cristallisation de carbonate de calcium en milieu aqueux.

Afin de réduire l'encombrement au stockage des cristaux de carbonate de calcium destinés notamment aux industries du papier, des matières plastiques et des peintures, et pour faciliter par ailleurs leur manutention, il est avantageux de les stocker et de les transporter sous forme de suspensions aqueuses concentrées, contenant généralement de 65 à 80% en poids de cristaux.

A cet effet, dans le brevent belge 819 747 de Gewerkschaft Victor Chemische Werke, déposé le 10 septembre 1974, on propose un procédé suivant lequel on cristallise du carbonate de calcium en milieu aqueux, on filtre la suspension aqueuse de carbonate de calcium résultante pour en séparer un concentré humide de carbonate de calcium, on fluidifie et homogénéise le concentré de carbonate de calcium en présence d'un agent dispersant, et on soumet la suspension concentrée de carbonate de calcium ainsi obtenue à un broyage humide.

Ce procédé connu présente le désavantage de nécessiter une opération coûteuse de broyage. Celle-ci est en effet imposée par la nécessité de briser les nombreux agglomérats grossiers de cristaux de carbonate de calcium présents dans le concentré humide de carbonate de calcium. Outre son influence défavorable sur le coût du procédé, cette opération de broyage présente l'inconvénient de donner lieu à la formation de fines de carbonate de calcium, qui ne conviennent généralement pas comme matière de charge.

On a essayé d'éviter l'opération de broyage, en exécutant la cristallisation du carbonate de calcium dans un milieu aqueux contenant un sel de métal acalin ou alcalino-terreux de l'acide nitrilotriacétique, à titre d'agent dispersant, et en filtrant ensuite la suspension diluée de carbonate de calcium résultante, comme décrit dans la demande de brevet allemand 1 116 203, déposée le 13 octobre 1959, au nom de Farbenfabriken Bayer AG.

Les gâteaux de filtration obtenus par ce procédé connu se présentent sous la forme de suspensions aqueuses de cristaux fins, convenant bien comme matière de charge en papeterie, dans les matières plastiques et dans les peintures. Toutefois, la concentration en cristaux de carbonate de calcium de ces suspensions aqueuses est généralement insuffisante pour permettre leur stockage et leur manutention de manière économique, de sorte qu'il est nécessaire de les concentrer en les évaporant.

La Demanderesse a maintenant trouvé qu'en exécutant la cristallisation dans des conditions particulières, il est possible d'obtenir des suspensions aqueuses concentrées de cristaux fins et réguliers de carbonate de calcium, contenant généralement plus de 65% en poids de matière sèche, sans nécessiter un broyage ni une évaporation.

L'invention concerne donc un procédé pour la préparation de suspensions aqueuses contenant au moins 65% en poids de carbonate de calcium, suivant lequel on cristallise du carbonate de calcium en mulieu aqueux dilué, on sépare, de la suspension aqueuse diluée de carbonate de calcium résultante, un concentré humide de carbonate de calcium et on fluidifie et homogénéise ledit concentré de carbonate de calcium en présence d'un agent dispersant, la cristallisation du carbonate de calcium étant opérée en présence d'un polyélectrolyte hydrosoluble et la séparation du concentré humide de la suspension aqueuse diluée étant effectuée par un moyen mécanique.

On entend par polyélectrolyte, une substance polymérique dont les unités monomériques possèdent des groupes ionisables, et qui est composée, d'une part, d'un macroion formé de groupes ioniques de même signe, reliés entre eux par des liaisons chimiques et, d'autre part, d'une série de contre-ions de charge opposée à celle du macroion (Encyclopedia of Polymer Science and Technology — John Wiley & Sons — 1969 — Vol. 10, p. 781).

Dans le cadre de l'invention, il s'est avéré intéressant d'utiliser, des polyacides, ou leurs sels, qui sont des polyélectrolytes qui, en se dissociant, donnent naissance à des anions polymériques (polyanions) et à des cations élémentaires tels que, par exemple, des protons ou des cations monovalents dérivés de métaux alcalins (Op. cit., p. 781 à 784). On utilise de préférence des polyacides à caractère acide faible, définis comme étant des polyacides dont le pK, mesuré sur une solution à 0,01 N dans l'eau pure, est supérieur à 4, de préférence à 6 (Op. cit., p. 787 à 788).

Des polyacides à caractère acide faible convenant bien dans le cadre de l'invention sont ceux dérivant de polymères comprenant au moins un groupe carboxylique pour 10 atomes de carbone. A titre d'exemples de polyacides utilisables dans le procédé suivant l'invention, on peut notamment citer les polymères dérivés des acides acrylique, méthacrylique et alpha-hydroxyacrylique, les copolymères de l'acide maléique, les dérivés carboxylés des éthers cellulosiques, et leurs sels de métaux alcalins.

Suivant l'invention, des polyélectrolytes particulièrement avantageux comprennent les sels de métaux alcalins des acides polyacryliques et de leurs dérivés tels que les acides poly-alphahydroxyacryliques, plus particulièrement celui connu sous le nom de Polysel CA (BASF) qui est à base de polyacrylate de sodium.

Dans le procédé suivant l'invention, la cristallisation du carbonate de calcium en milieu aqueux peut être exécutée par tout moyen connu en soi, par exemple en faisant réagir une solution de carbonate d'ammonium ou de métal alcalin.

Suivant l'invention, la cristallisation du carbonate de calcium est avantageusement exécutée en carbonatant un lait de chaux, de préférence au moyen d'un gaz contenant du $CO_2$. Dans cette forme de réalisation de l'invention, on peut par exemple utiliser un lait de chaux titrant entre 25 et 350, de préférence entre 50 et 250, kg de CaO par $m^3$, que l'on prépare de manière bien connue en soi, en dispersant dans de l'eau, de la chaux vive provenant de la calcination du calcaire dans un four à chaux. Pour carbonater le lait de chaux on peut faire usage d'un gaz pauvre en $CO_2$, par exemple des fumées de chaudière contenant de 5 à 15% en volume de $CO_2$. En variante, on peut évidemment aussi utiliser un gaz riche en $CO_2$, contenant plus de 30% de $CO_2$, tel que le gaz récupéré des fours à chaux.

Les quantités respectives de lait de chaux et de gaz de carbonatation doivent être suffisantes pour assurer une carbonatation aussi complète que possible de la chaux. Ces quantités dépendent évidemment des concentrations respectives du lait de chaux et du gaz, ainsi que des conditions de travail, et elles peuvent, dans chaque cas particulier, être établies facilement par l'expérience. On exécute de préférence la cristallisation à une température de l'ordre de 25 à 60°C, par exemple voisine de 30 à 50°C.

Dans le procédé suivant l'invention, la quantité de polymère incorporée au milieu aqueux dépend de divers facteurs, parmi lesquels les conditions de travail pendant la cristallisation et la nature du polymère utilisé; elle peut être déterminée aisément par l'expérience, dans chaque cas. A titre d'exemple, dans le cas particulier où on cristallise le carbonate de calcium en carbonatant un lait de chaux, on peut avantageusement utiliser, à titre de polyélectrolyte, entre 1 et 10 g, de préférence entre 2 et 6 g, de polyacrylate de métal alcalin par kg de matière sèche de la suspension aqueuse diluée de carbonate de calcium.

On entend par concentré de carbonate de calcium, un gâteau humide de carbonate de calcium, qui a été formé à partir de la suspension aqueuse diluée précitée de carbonate de calcium.

Suivant l'invention, pour séparer le concentré de carbonate de calcium de ladite suspension aqueuse diluée, on utilise des moyens de séparation essentiellement mécaniques. Dans le cadre de l'invention, on entend, par moyens de séparation essentiellement mécaniques, des moyens par lesquels on soumet une suspension de matière solide dans un liquide, à une séparation physique en au moins une phase très concentrée en matière solide et une phase très diluée, sans apport supplémentaire de matière solide dans la suspension ni changement d'état de l'un ou l'autre constituant de la suspension, en particulier sans évaporation, ni solidification du liquide.

A titre de moyen de séparation mécanique, on peut par exemple utiliser, conformément à l'invention, une filtration, un essorage ou une décantation de la suspension aqueuse diluée, qui sont des techniques bien connues en soi. En variante, on peut aussi combiner deux ou plusieurs moyens de séparation mécanique distincts.

Suivant l'invention, on préfère utiliser, à titre de moyen de séparation mécanique, une filtration, qui est une technique bien connue en soi, le gâteau de filtration recueilli sur le filtre constituant alors le concentré humide précité. De manière connue en soi, on exécute avantageusement une filtration de la suspension diluée sous pression, par exemple entre 0,5 et 15 $kg/cm^2$, et on la fait éventuellement suivre d'une compression du gâteau de filtration sous une pression comprise entre 1 et 20 $kg/cm^2$ et d'un balayage par un courant d'air sous une pression de 0,5 à 6 $kg/cm^2$. La température à laquelle on exécute la filtration ainsi que la compression et le balayage éventuels ne se sont pas avérées avoir une influence notable sur le résultat de la filtration. D'une manière générale, on peut par exemple exécuter celle-ci entre 15 et 50°C, avantageusement à température ambiante.

La fluidification du concentré de carbonate de calcium consiste à soumettre celui-ci à un travail mécanique qui le transforme en une suspension aqueuse fluide, pompable. Elle est généralement réalisée, de manière connue en soi, par un malaxage du concentré, par exemple au moyen d'un mélangeur à palettes, à disques ou à cônes rotatifs.

L'homogénéisation a pour fonction d'assurer une dispersion efficace, homogène des cristaux de carbonate de calcium dans la suspension aqueuse fluide précitée résultant de l'opération de fluidification. Elle est généralement obtenue en soumettant celle-ci à une turbulence ou un travail de cisaillement intense au moyen d'un disperseur à grande vitesse, par exemple du type à palettes, à disques ou à couteaux.

Dans le procédé suivant l'invention, la fluidification et l'homogénéisation sont de préférence exécutées séparément.

L'agent dispersant utilisé pendant la fluidification et l'homogénéisation a pour fonction de faciliter la dispersion des cristaux de carbonate de calcium, en évitant la fomation d'agglomérats de cristaux. Il peut par exemple consister en un agent dispersant minéral, tel que l'agent dispersant du commerce connu sous le nom de Calgon (Calgon Corp.), qui est à base de polyphosphate de métal alcalin. En variante, l'agent dispersant peut aussi consister, au moins partiellement, en un agent dispersant organique, par exemple un agent dispersant choisi parmi les polyélectrolytes, de préférence les polyacides.

Des agents dispersants du commerce qui se sont avérés particulièrement efficaces sont ceux connus sous les noms de Polysel CA (BASF) qui est un agent dispersant à base de polyacrylate de sodium et die Dispagil (Rhône-Progil) qui est un agent dispersant à base de polyphosphate et de polyacrylate de métal alcalin.

L'agent dispersant est de préférence ajouté au concentré de carbonate de calcium avant d'opérer la fluidification et l'homogénéisation. Il peut éventuellement être ajouté à la suspension aqueuse diluée de carbonate de calcium, avant séparation du concentré de carbonate de calcium. On a toutefois observé, en pratique, qu'il est préférable d'ajouter, l'agent dispersant au concentré de carbonate de calcium, après avoir séparé celui-ci de la suspension aqueuse, car il en résulte, toutes autres choses étant égales, une diminution de la quantité d'agent dispersant nécessaire.

La quantité d'agent dispersant utilisée pour fluidifier et homogénéiser le concentré de carbonate de calcium dépend de divers facteurs, parmi lesquels la nature de l'agent dispersant, la granulométrie des cristaux de carbonate de calcium et la teneur en carbonate de calcium du concentré. Elle peut être déterminée aisément par l'expérience dans chaque cas. D'une manière générale, elle est avantageusement comprise entre 2 et 10 g, de préférence 4 et 8 g, par kg de carbonate de calcium du concentré.

Le procédé suivant l'invention permet d'obtenir facilement, rapidement et de manière économique, des suspensions aqueuses concentrées, stables de cristaux réguliers de carbonate de calcium, contenant généralement au moins 65%, de préférence de 68 à 75%, en poids de cristaux, sans nécessiter de traitement coûteux d'évaporation, ni de broyage. Ces suspensions cocentrées se prètent bien à un stockage de longue durée et à des manutentions, sans que leur stabilité en soit affectée. Les cristaux de carbonate de calcium qu'elles contiennent sont bien formés et réguliers et conviennent bien comme matière de charge en papeterie, dans les peintures et dans la fabrication des matières plastiques.

Les exemples d'application suivants vont illustrer l'invention sans toutefois en limiter la portée.

Dans ces exemples, on a carbonaté un lait de chaux avec un gaz contenant du $CO_2$. La suspension aqueuse diluée de carbonate de calcium ainsi obtenue a ensuite été filtrée sous une pression maximum de 4,5 kg/cm², le gâteau de filtration obtenu a été comprimé sous une pression maximum de 17 kg/cm² pour l'essorer, puis soumis à un balayage d'air sous pression égale à 5,3 kg/cm² pendant 10 minutes, fournissant ainsi un concentré humide de carbonate de calcium. Ce concentré de carbonate de calcium a ensuite été fluidifié puis homogénéisé par passage successivement dans un malaxeur puis dans un disperseur, fournissant ainsi une suspension aqueuse de carbonate de calcium.

Les exemples 1 et 2 concernent des essais conformes à l'invention.

### Exemple 1

Avant la carbonatation, on a introduit dans le lait de chaux, qui titrait environ 120 kg de CaO par m³, du Polysel CA qui est un polyélectrolyte du commerce à base de polyacrylate de sodium. La quantité de Polysel CA introduite dans le lait de chaux a été réglée de manière qu'elle corresponde approximativement à 2,5 g de Polysel CA par kg de carbonate de calcium cristallisé. On a ensuite carbonaté le lait de chaux avec un gaz contenant entre 23 et 27% de $CO_2$, sous un débit de 1350 m³/h, pendant 7 h 15 min. La température a été maintenue à 37° C.

Le concentré de carbonate de calcium recueilli sur le filtre a été fluidifié et homogénéisé en présence de Calgon qui est un agent dispersant du commerce à base de polyphosphate de sodium. On a utilisé 7 g de Calgon par kg de carbonate de calcium du concentré. On a ainsi obtenu une suspension aqueuse condentrée contenant 68% de cristaux réguliers de carbonate de calcium. Cette suspension aqueuse est restée stable pendant plus de 30 jours.

### Exemple 2

On a répété l'essai de l'exemple 1, en utilisant un lait de chaux titrant environ 120 kg de CaO par m³ et un gaz contenant entre 29 et 32% de $CO_2$. La carbonatation, effectuée à 32° C, a duré 7 h 35 min., avec un débit de gaz compris entre 1200 et 1350 m³/h. On a réglé la quantité de Polysel CA pour qu'elle corresponde à 5 g par kg de carbonate de calcium.

Pour la fluidification et l'homogénéisation du concentré de carbonate de calcium recueilli sur le filtre, on a fait usage, à titre d'agent dispersant, de 4 g de Polysel CA par kg de carbonate de calcium.

La suspension aqueuse concentrée de carbonate de calcium obtenue contenait 71,7% en poids de cristaux de carbonate de calcium; elle est restée stable pendant plus de 30 jours.

### Exemple 3 (essai comparatif)

On a répété l'essai des exemples 1 et 2, mais en omettant d'ajouter un polyélectrolyte au lait de chaux. On a utilisé un lait de chaux titrant environ 122 kg de CaO par m³ et un gaz contenant entre 24 et 32% de $CO_2$, sous un débit réglé entre 1350 et 1500 m³/h pendant 6 h 30 min. La température a été maintenue entre 32 et 34° C pendant toute la durée de la carbonatation. On a filtré la suspension aqueuse de carbonate de calcium, et on a soumis le concentré de carbonate de calcium recueilli sur le filtre, à une opération de fluidification et d'homogénéisation de la manière décrite à l'exemple 1. On a ainsi obtenu une suspension aqueuse de cristaux de carbonate de calcium contenant à peine 63,7% en poids de cristaux. Cette suspension aqueuse s'est en outre avérée nettement moins stable que celles des exemples 1 et 2.

Une comparaison des exemples 1 et 2, d'une part, avec l'exemple 3, d'autre part, fait apparaître immédiatement l'intérêt du procédé suivant l'invention qui permet d'obtenir facilement, sans évaporation, par simple filtration, des suspensions aqueuses stables contenant au moins 68% poids de cristaux de carbonate de calcium.

L'invention n'est pas limitée aux exemples qui précèdent, de nombreuses modifications pouvant y être apportées.

## Revendications

1. Procédé pour la préparation de suspensions aqueuses contenant au moins 65% en poids de carbonate de calcium, suivant lequel on cristallise du carbonate de calcium en milieu aqueux dilué, on sépare, de la suspension aqueuse diluée de carbonate de calcium résultante, un concentré humide de carbonate de calcium et on fluidifie et homogénéise ledit concentré de carbonate de calcium en présence d'un agent dispersant, caractérisé en ce qu'on cristallise le carbonate de calcium en présence d'un polyélectrolyte hydrosoluble et en ce qu'on sépare le concentré de carbonate de calcium de la suspension diluée de carbonate de calcium par un moyen de séparation mécanique.

2. Procédé suivant la revendication 1, caractérisé en ce qu'on choisit le polyélectrolyte parmi les polyacides et leurs sels de métaux alcalins.

3. Procédé suivant la revendication 2, caractérisé en ce qu'on choisit le polyélectrolyte parmi les polyacides à caractère acide faible et leurs sels de métaux alcalins.

4. Procédé suivant la revendication 3, caractérisé en ce qu'on choisit le polyélectrolyte parmi les polyacides dérivés des polymères comprenant au moins un groupe carboxylique pour 10 atomes de carbone et leurs sels de métaux alcalins.

5. Procédé suivant la revendication 4, caractérisé en ce qu'on choisit le polyélectrolyte parmi les polymères dérivés des acides acrylique, méthacrylique et alpha-hydroxyacrylique, les copolymères de l'acide maléique, les dérivés carboxylés des éthers cellulosiques, et leurs sels de métaux alcalins.

6. Procédé suivant la revendication 5, caractérisé en ce que le polyélectrolyte est un polyacrylate de sodium.

7. Procédé suivant la revendication 5, caractérisé en ce que le polyélectrolyte est un poly-alpha-hydroxyacrylate de sodium.

8. Procédé suivant l'une quelconque des revendications 1 à 7, caractérisé en ce que, pour cristalliser le carbonate de calcium, on carbonate un lait de chaux.

9. Procédé suivant la revendication 8, caractérisé en ce qu'on carbonate le lait de chaux avec un gaz contenant du $CO_2$.

10. Procédé suivant la revendication 8 ou 9, caractérisé en ce qu'on carbonate le lait de chaux à une température comprise entre 25 et 60°C.

11. Procédé selon l'une quelconque des revendications 8 à 10, caractérisé en ce qu'on met en oeuvre, pour le polyélectrolyte, du polyacrylate de métal alcalin en quantité réglée dans le milieu aqueux dilué de la cristallisation, de manière que la suspension diluée contienne entre 1 et 10 g de polyacrylate de métal alcalin par kg de matière sèche.

12. Procédé suivant la revendication 11, caractérisé en ce que la suspension diluée contient entre 2 et 6 g de polyacrylate de métal alcalin par kg de matière sèche.

13. Procédé suivant l'une quelconque des revendications 1 à 12, caractérisé en ce que le moyen de séparation mécanique comprend une filtration de la suspension diluée de carbonate de calcium.

14. Procédé suivant l'une quelconque des revendications 1 à 13, caractérisé en ce que le moyen de séparation mécanique comprend un essorage.

15. Procédé suivant la revendication 14, caractérisé en ce qu'on filtre la suspension aqueuse diluée de carbonate de calcium et on essore le gâteau de filtration résultant en le comprimant et en le soumettant à un balayage par un courant d'air.

16. Procédé suivant l'une quelconque des revendications 1 à 15, caractérisé en ce que, pour fluidifier et homogénéiser le concentré de carbonate de calcium, on utilise entre 2 et 10 g d'agent dispersant par kg de carbonate de calcium

17. Procédé suivant la revendication 16, caractérisé en ce qu'on utilise entre 4 et 8 g d'agent dispersant.

18. Procédé suivant l'une quelconque des revendications 1 à 17, caractérisé en ce qu'on introduit l'agent dispersant directement dans le concentré de carbonate de calcium.

## Patentansprüche

1. Verfahren zur Herstellung wäßriger Suspensionen enthaltend mindestens 65 Gew.-% Calciumcarbonat, wobei man Calciumcarbonat in wäßrigem verdünnten Milieu kristallisiert, von der sich ergebenden verdünnten wäßrigen Suspension des Calciumcarbonates ein feuchtes Calciumcarbonat-Konzentrat abtrennt und dieses in Anwesenheit eines Dispersionsmittels fluidisiert und homogenisiert, dadurch gekennzeichnet, daß man das Calciumcarbonat in Anwesenheit eines wasserlöslichen Polyelektrolyten kristallisiert und daß man das Calciumcarbonat-Konzentrat von der verdünnten Calciumcarbonat-Suspension auf mechanische Weise abtrennt.

2. Verfahren gemäß Anspruch 1, dadurch gekennzeichnet, daß man den Polyelektrolyten auswählt unter den Polysäuren und ihren Alkalimetallsalzen.

3. Verfahren gemäß Anspruch 2, dadurch gekennzeichnet, daß man den Polyelektrolyten auswählt unter den schwach sauren Polysäuren und ihren Alkalimetallsalzen.

4. Verfahren gemäß Anspruch 3, dadurch gekennzeichnet, daß man den Polyelektrolyten auswählt unter den Polysäuren, die von Polymeren abgeleitet sind und mindestens eine Carboxylgruppe je 10 Kohlenstoffatomen enthalten und ihren Alkalimetallsalzen.

5. Verfahren gemäß Anspruch 4, dadurch gekennzeichnet, daß man den Polyelektrolyten auswählt unter den Polymeren abgeleitet von Acrylsäure, Methacrylsäure und alpha-Hydroxyacrylsäure, den Copolymeren von Maleinsäure, den carboxylierten Derivaten der Celluloseäther und ihren Alkalimetallsalzen.

6. Verfahren gemäß Anspruch 5, dadurch gekennzeichnet, daß der Polyelektrolyt ein Natriumpolyacrylat ist.

7. Verfahren gemäß Anspruch 5, dadurch gekennzeichnet, daß der Polyelektrolyt ein Natrium-poly-alpha-hydroxyacrylat ist.

8. Verfahren gemäß einem der Ansprüche 1 bis 7, dadurch gekennzeichnet, daß man zur Kristallisation des Calciumcarbonats Kalkmilch carbonatisiert.

9. Verfahren gemäß Anspruch 8, dadurch gekennzeichnet, daß man Kalkmilch mit einem $CO_2$-haltigen Gas carbonatisiert.

10. Verfahren gemäß einem der Ansprüche 8 oder 9, dadurch gekennzeichnet, daß man Kalkmilch bei einer Temperatur zwischen 25 und 60° C carbonatisiert.

11. Verfahren gemäß einem der Ansprüche 8 bis 10, dadurch gekennzeichnet, daß man als Polyelektrolyten ein Alkalimetallpolyacrylat einsetzt in einer in dem verdünnten wäßrigen Kristallisaationsmilieu geregelten Menge derart, daß die verdünnte Suspension 1−10 g des Alkalimetallpolyacrylats je kg Trockenmasse enthält.

12. Verfahren gemäß Anspruch 11, dadurch gekennzeichnet, daß die verdünnte Suspension 2−6 g Alkalimetallpolyacrylat je kg Trockenmasse enthält.

13. Verfahren gemäß einem der Ansprüche 1 bis 12, dadurch gekennzeichnet, daß die mechanische Abtrennung erfolgt durch Filtration der verdünnten Calciumcarbonat-Suspension.

14. Verfahren gemäß einem der Ansprüche 1 bis 13, dadurch gekennzeichnet, daß die mechanische Abtrennung durch Absaugung erfolgt.

15. Verfahren gemäß Anspruch 14, dadurch gekennzeichnet, daß man die verdünnte wäßrige Calciumcarbonat-Suspension filtriert und den sich ergebenden Filterkuchen durch Zusammendrücken absaugt und einem Luftstrom unterwirft.

16. Verfahren gemäß einem der Ansprüche 1 bis 15, dadurch gekennzeichnet, daß man zur Fluidisierung und Homogenisierung des Calciumcarbonat-Konzentrats 2−10 g Dispersionsmittel je kg Calciumcarbonat einsetzt.

17. Verfahren gemäß Anspruch 16, dadurch gekennzeichnet, daß man 4−8 g Dispersionsmittel einsetzt.

18. Verfahren gemäß einem der Ansprüche 1 bis 17, dadurch gekennzeichnet, daß man das Dispersionsmittel direkt in das Calciumcarbonat-Konzentrat einführt.

## Claims

1. Process for the preparation of aqueous suspensions containing at least 65% by weight of calcium carbonate, wherein calcium carbonate is crystallised in a dilute aqueous medium, a moist calcium carbonate concentrate is separated from the resulting dilute aqueous calcium carbonate suspension and the said calcium carbonate concentrate is fluidised and homogenised in the presence of a dispersing agent, characterised in that the calcium carbonate is crystallised in the presence of a water-soluble polyelectrolyte and in that the calcium carbonate concentrate is separated from the dilute calcium carbonate suspension by a mechanial separation means.

2. Process according to Claim 1, characterised in that the polyelectrolyte is chosen from amongst polyacids and their alkali metal salts.

3. Process according to Claim 2, characterised in that the polyelectrolyte is chosen from amongst polyacids of weakly acid character and their alkali metal salts.

4. Process according to Claim 3, characerised in that the polyelectrolyte is chosen from amongst polyacids derived from polymers containing at least one carboxyl group per 10 carbon atoms, and their alkali metal salts.

5. Process according to Claim 4, characterised in that the polyelectrolyte is chosen from amongst polymers derived from acrylic, methacrylic and alpha-hydroxyacrylic acids, maleic acid copolymers, carboxylated derivatives of cellulose ethers, and their alkali metal salts.

6. Process according to Claim 5, characterised in that the polyelectrolyte is a sodium polyacrylate.

7. Process according to Claim 5, characterised in that the polyelectrolyte is a sodium poly-alpha-hydroxyacrylate.

8. Process according to any one of Claims 1 to 7, characterised in that, to crystallise the calcium carbonate, a milk of lime is carbonated.

9. Process according to Claim 8, characterised in that the milk of lime is carbonated with a gas containing $CO_2$.

10. Process according to Claim 8 or 9, characterised in that the milk of lime is carbonated at a temperature between 25 and 60° C.

11. Process according to any one of Claims 8 to 10, characterised in that alkali metal polyacrylate is used, as the polyelectrolyte, in a regulated amount in the dilute aqueous crystallisation medium, so that the dilute suspension contains between 1 and 10 g of alkali metal polyacrylate per kg of solids.

12. Process according to Claim 11, characterised in that the dilute suspension contains between 2 and 6 g of alkali metal polyacrylate per kg of solids.

13. Process according to any one of Claims 1 to 12, characterised in that the mechanical separation means comprises filtration of the dilute calcium carbonate suspension.

14. Process according to any one of Claims 1 to 13, characterised in that the mechanical separation means comprises draining.

15. Process according to Claim 14, characterised in that the dilute aqueous calcium carbonate suspension is filtered and the resulting filter cake is drained by compressing it and by subjecting it to sweeping with a stream of air.

16. Process according to any one of Claims 1 to 15, characterised in that, to fluidise and homogenise the calcium carbonate concentrate, between 2 and 10 g of dispersing agent are used per kg of calcium carbonate.

17. Process according to Claim 16, characterised in that between 4 and 8 g of dispersing agent are used.

18. Process according to any one of Claims 1 to 17, characterised in that the dispersing agent is introduced directly into the calcium carbonate concentrate.